(19) **Europäisches Patentamt**

**European Patent Office**

**Office européen des brevets**

(11) **EP 1 104 969 B1**

(12) **EUROPEAN PATENT SPECIFICATION**

(45) Date of publication and mention
of the grant of the patent:
**14.06.2006 Bulletin 2006/24**

(51) Int Cl.:
***H04N 1/32*** *(2006.01)*

(21) Application number: **99250430.8**

(22) Date of filing: **04.12.1999**

(54) **Method and apparatus for decoding and watermarking a data stream**

Verfahren und Vorrichtung zum Dekodieren und Einfügen eines Wasserzeichens in einen Datenstrom

Procédé et dispositif de décodage et d'insertion d'un filigrane dans un flux de données

(84) Designated Contracting States:
**DE FR GB IT**

(43) Date of publication of application:
**06.06.2001 Bulletin 2001/23**

(73) Proprietor: **DEUTSCHE THOMSON-BRANDT GMBH**
**78048 Villingen-Schwenningen (DE)**

(72) Inventor: **Böhm, Johannes**
**37083 Göttingen (DE)**

(74) Representative: **Hartnack, Wolfgang**
**Deutsche Thomson-Brandt GmbH**
**European Patent Operations**
**Karl-Wiechert-Allee 74**
**30625 Hannover (DE)**

(56) References cited:
**EP-A- 0 766 468**     **EP-A- 0 905 967**
**EP-A- 0 928 110**     **EP-A- 0 933 920**
**WO-A-99/29114**

**Description**

The invention relates to a method for decoding a data stream and for inserting a watermark into said data stream and a watermarking decoder for performing said method.

Background

Tomorrow's wide area networks based on media-on-demand distribution systems will make use of both perceptual encoding/decoding and public key encryption mechanisms. Perceptual encoding/decoding is used for data rate reduction to minimise transmission bandwidth providing cost savings. Public key encryption mechanisms are used to maintain intellectual property protection.

Once decrypted and decoded, a multimedia data stream that still shows excellent quality is available unprotected for multiple copying. Watermarking the digital audio signal with copyright data (e.g. buyer's user ID) will enable tracking of piracy.

A watermark is an additional data stream or additional data or artificial error inserted into an original data stream or data frame or picture. It contains information relevant to ownership or authorised use of the multimedia data stream. Using watermarks has a deterrent effect and enhances possible acceptance of new distribution technologies, for example for the music industry.

A watermarked data stream contains inaudible/invisible binary information used for royalty tracking and/or copyright management. Binary information may include copyright notices, time stamps, purchasing data and a user ID.

It should be about impossible to erase the watermark without degrading the audio or video quality of the decoded data stream. In order to guarantee this, watermarking information should be placed at or near the border between perceptual significant and insignificant parts of encoded audio or video data included in the data stream.

A well-known technique of watermarking is to spread watermarking information into a spectrum of original audio data coefficients referred to as information hiding in the frequency domain. Image or sound data transformed into the frequency domain can be viewed as a communication channel or a data carrier for watermark information. In spread spectrum communications, a narrow band signal is transmitted over a much larger bandwidth such that the signal energy present in any single frequency is imperceptible. Similarly, watermark information is spread over very many frequency bins so that the resultant energy in each bin is very small and certainly undetectable.

EP-A-0766468 shows that for a received data stream coefficients in the frequency domain are provided from which perceptually relevant data carriers are derived that can be selected for carrying a watermark, and from which the strength of an insertion factor for inserting the watermark is derived. The watermark is inserted into the perceptually relevant data carriers whereby that watermark insertion is controlled.

Invention

Because for a watermark verification process the location and content of the watermark needs to be known, it would be possible for pirates to concentrate these many weak signals into a single signal with high signal-to-noise ratio.

In order to use both encoding/decoding and watermarking, known systems consist of a watermarker and a perceptual encoder/decoder. Therefore, hardware and/or software expenses and processing performance demands are high.

It is an object of the present invention to disclose a method and a system that reduce system costs and processing demand while still achieving a high level of security.

An aspect of the invention concerns a method for,decoding a data stream and inserting a watermark therein, including the steps of:

- receiving and de-formatting said data stream, the data stream including data coefficients in the frequency domain;
- reconstructing from said de-formatted data stream mantissas and scale factors for said data coefficients;
- combining said reconstructed mantissas and reconstructed scale factors to provide a mantissa and scale factor representation of said de-formatted data stream;
- selecting perceptual relevant data carriers from said mantissa and scale factor representation, and determining the strength of an insertion factor for inserting said watermark;
- inserting said watermark into at least one of said perceptually relevant data carriers selected for carrying said watermark, thereby providing watermarked coefficient,data;
- transforming the watermarked coefficient data to the time domain, thereby providing a watermarked data stream.

A further aspect of the invention concerns a watermarking decoder for decoding a data stream and inserting a watermark therein, including:

- a de-formatter for de-formatting the received data stream, the data stream including data coefficients in the frequency domain;
- reconstruction means for providing from said de-formatted data stream a reconstructed mantissa and scale factor representation for said data coefficients;
- a watermark insertion controller for selecting perceptually relevant data carriers from said mantissa and rescale factor representation and for determining the strength of an insertion factor for inserting said watermark;
- insertion means for inserting said watermark into at least one of said perceptually relevant data carriers selected for carrying said watermark, thereby providing watermarked coefficient data;
- a transformer for transforming said watermarked coefficient data to the time domain, thereby providing a watermarked data stream.

According to the invention, a decoder is disclosed wherein building blocks of a perceptual encoder/decoder and a watermarker are combined. By combining building blocks required for two different processing tasks, watermarking and perceptual encoding/decoding, the overall system costs are reduced. This decoder is especially suited for network based media-on-demand distribution systems. At server's side an encoded multimedia data stream can be stored. There is no need for costly watermarking processing loops. At player's side performance requirements are increased in only neglect able manner.

Further advantageous features of the invention are disclosed in the respective dependent claims.

Drawings

Exemplary embodiments of the invention are described with reference to the accompanying drawings, which show in:

Fig. 1    a block diagram of a watermarking encoder;
Fig. 2    a block diagram of a watermarking decoder;
Fig. 3    reconstructed subband samples.

Exemplary embodiments

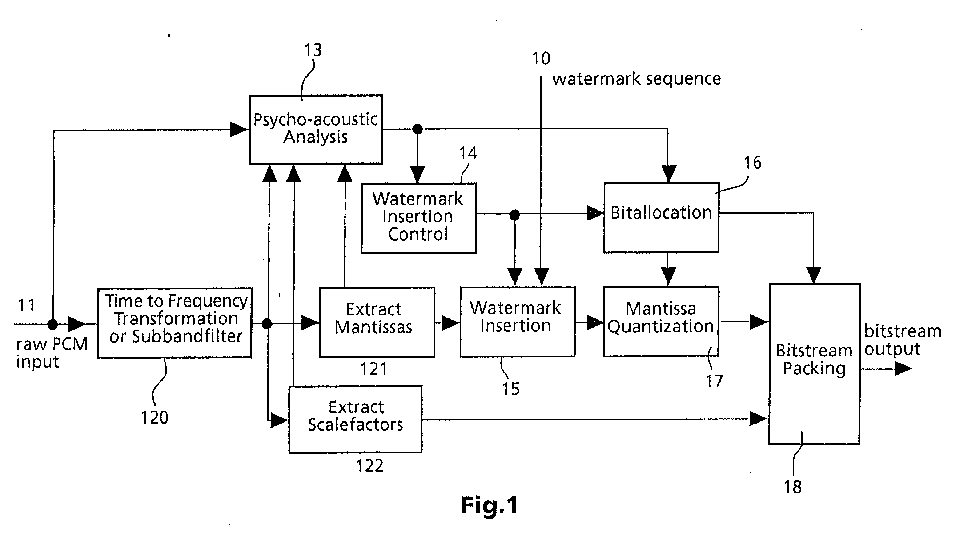

Fig. 1 is a block diagram of a watermarking audio encoder. Perceptual audio codecs operate in the frequency domain by filtering or transforming and subsampling a time domain signal to a number of subband samples or coefficients (transform bins) represented by means of scale factors and mantissas. Examples for popular codecs are:
MPEG1 Layer 2 with N = 32 subbands and filter matrix;
AC-3 with N = 512 or 256 coefficients per transform block.

In the following, the watermarking encoder is described as a subband sample encoder. In this case, each subband sample is a possible data carrier for auxiliary data, i.e. a watermark sequence. A multimedia raw data input 11 is processed in a time-to-frequency mapping subband filter stage 120, 121, 122 to provide a scale factor and mantissa representation of subband samples in the frequency domain.

Utilising the scale factor and mantissa representation, a psychoacoustic analysis building block 13 determines the number of bits to be allocated for the quantisation of the mantissas in order to determine perceptually relevant subband samples that may be selected as data carriers for the watermark information, and determines the strength of a watermark insertion factor $\beta$. Psychoacoustic analysis is based on a psychoacoustic modelling which takes into account the non-linear processing mechanisms of the human ear. Frequency selective areas in the cochlea, called critical bands, exhibit a saturation characteristic whereby higher amplitude frequency components render inaudible such weaker components in the same critical band that lie below a certain threshold. The value of the threshold follows the decaying pattern of an experimentally determined masking function. An algorithmic process of estimating the masking function (s) is called psychoacoustic modelling.

A watermark insertion controller 14 handles in a watermark inserter 15 the proper insertion of the watermark sequence 10 into selected data carriers (subband samples or transform bins).

A bit allocator 16 controls quantisation of mantissas performed in a mantissa quantisation building block 17. The order of processing quantisation of mantissa 17 and watermark insertion 15 can be reversed. Thereafter, scale factors, quantised mantissas and bit allocation information are formatted 18 into bit stream frames (bitstream packing 18).

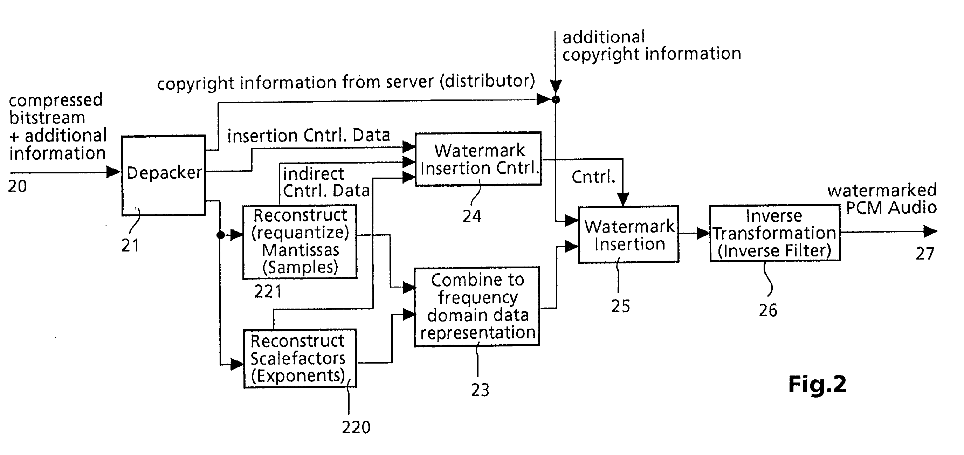

The watermarking decoder in Fig. 2 receives a multimedia data stream 20 that becomes de-formatted by means of a depacker 21. From the de-formatted data scale factors 221 and mantissas 220 are reconstructed, wherein requantising mantissas means requantising samples. Thereafter subband samples (or transform bins) are provided by combining requantised mantissas and reconstructed scale factors such that a frequency domain representation of the received multimedia data stream is provided 23.

In the watermarking part of the decoder reconstructed subband samples (or transform bins) can be looked upon as possible data carriers that may be selected for carrying a watermark and the strength of a watermark insertion factor β.

Only perceptually significant parts (subband samples or transform bins) will be selected as data carriers. A watermark insertion controller 24 to provide insertion control information handles the selection task and determination of watermark insertion factor β. The watermark insertion controller 24 may utilise separate insertion control data sent by the encoder as auxiliary data and derived from a depacked multimedia data stream and/or indirect control data received from analysing the multimedia data stream only, i.e. there is no need for separate insertion control data sent by an encoder according to Fig. 1.

The insertion control information is used for inserting 25 the watermark into selected data carriers, i.e. into selected subband samples (or transform bins). Subsequently, watermarked subband samples are transformed 26 into the time domain, thereby providing a watermarked multimedia data stream 27.

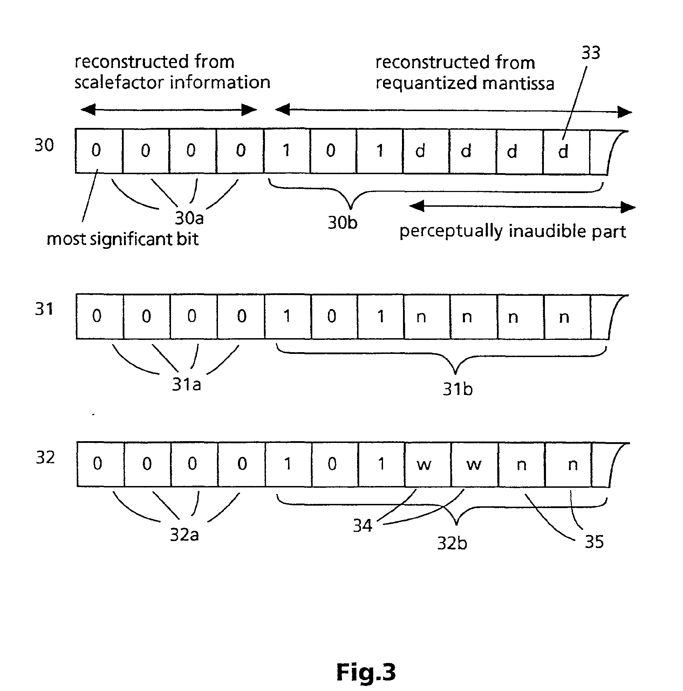

Referring now to Fig. 3, the insertion of the watermark is described in more detail. At decoder side transformation bins or subband samples are reconstructed 220, 221, 23. Fig. 3 shows examples of positive frequency domain sample words 30, 31, 32 in the encoder or reconstructed positive subband sample words 30, 31, 32. These samples each consist of a part 30a, 31a, 32a reconstructed from scale factor information and another part 30b, 31b, 32b reconstructed from requantised mantissas.

Marked as d-bits 33 are least significant bits that are considered not to be audible by the psychoacoustic model used in block 13 of Fig. 1. In principle, these d-bits 33 could be noise. An idealised encoder would code bit streams in a way that would turn out as quantisation noise on the decoder side (see reconstructed subband sample 31).

Encoders might in some cases select a slightly longer bit allocation and a finer quantisation for mantissas of particular subband samples, which leads to increased bit rate. This is shown in reconstructed subband sample 32. w-bits 34 depict the result of a finer quantisation, and n-bits 35 represent a quantisation noise part.

The above-described method for encoding/decoding and watermarking utilises w-bits 34 (noise parts) to generate an auxiliary data channel for carrying a watermark sequence or information, i.e. uses the w-bits as a location for hiding a watermark sequence.

As already described, only perceptually insignificant parts of subband samples or transform bins are selected as data carriers. For example, m data carriers V = v1, ..., vm may be selected where m < N and N is the number of perceptual significant data carriers. Corresponding m insertion strength values β1 ..., βm are determined.

Watermark sequence bits can be inserted directly into the mantissa's w-bits 34, thereby overwriting the 'old' least significant bits. In that case, β denotes the number of allowed bits.

An alternative procedure of insertion uses βm as real-valued factors. Watermark insertion building block 15 or 24, respectively, will handle the insertion of a watermark sequence W = w1, ..., wm in order to form a sequence of watermarked data carriers V' = v'1, ..., v'm with each one selected according to one of the formulae:

$$v'i \ = \ vi \ + \ \beta i * wi \qquad (1)$$

$$v'i \ = \ vi(1 \ + \ \beta i * wi) \qquad (2)$$

$$v'i \ = \ vi * \alpha * \exp(\beta i * wi) \qquad (3)$$

where α is a constant factor and i = 1, ..., m.

The content of the watermark sequence is repeated in time before another sequence is selected (watermarking information). This can be done by interleaving blocks to keep a stochastic nature of the watermark sequence.

**Claims**

1. Method for decoding in a decoder at player's side a perceptually encoded audio data stream (20) and inserting a watermark therein, including the steps of:

   - receiving and de-formatting (21) said data stream, the data stream including data coefficients in the frequency domain;

- reconstructing (220, 221) from said de-formatted data stream mantissas and scale factors for said data coefficients;
- combining (23) said reconstructed mantissas and reconstructed scale factors to provide a mantissa and scale factor representation of said de-formatted data stream;
- selecting (24) perceptually significant data carriers from said mantissa and scale factor representation, and determining the strength of an insertion factor (β) for inserting said watermark;
- inserting (25) said watermark into at least one of said perceptually significant data carriers selected for carrying said watermark, thereby providing watermarked coefficient data;
- transforming (26) said watermarked coefficient data to the time domain, thereby providing a watermarked data stream (27).

2. Method according to claim 1, wherein said step of selecting perceptually relevant data carriers and determining the strength of the insertion factor (β) further includes a step of utilising (24) insertion control data derived from said depacked data stream.

3. Method according to claim 1 or 2, wherein said step of inserting (25) said watermark includes a step of overwriting least significant bits (33) in mantissas of said mantissa and scale factor representation selected for carrying said watermark.

4. Method according to claim 3, wherein said least significant bits are contained in said selected mantissas in a mantissa part (30b, 31b, 32b) perceptually inaudible.

5. Method according to claim 1 or 2, wherein said mantissa and scale factor representation in the frequency domain is a representation of subband samples or transform coefficients.

6. Method according to one of claims 1 to 5, wherein N data carriers are provided and said watermark is a watermark sequence w1, ..., wm with m < N, said method including the further steps:

   - selecting m perceptually relevant data carriers vm;
   - inserting said watermark sequence w1, ..., wm into said perceptually relevant data carriers vm such that watermarked data carriers V' = v'1, ..., v'm are formed.

7. Method according to claim 6, wherein said data carriers are subband samples or transform coefficients.

8. Method according to claim 6 or 7, wherein β1, ..., βm with m < N is a sequence of strengths of insertion factors and said watermarked data carriers V' are each one selected according to one of the formulae:

$$v'i = vi + \beta i * wi$$

$$v'i = vi(1 + \beta i * wi)$$

$$v'i = vi * \alpha * \exp(\beta i * wi)$$

where $\alpha$ is a constant factor and i = 1, ..., m.

9. Method according to one of claims 6 to 8, wherein said watermark sequence w1, ..., wm is repeated before another watermark.sequence is selected.

10. A watermarking decoder decoding at player's side a perceptually encoded audio data stream (20) and inserting a watermark therein, including:

- a de-formatter (21) for de-formatting the received data stream, the data stream including data coefficients in the frequency domain;
- reconstruction means (220, 221) for providing from said de-formatted data stream a reconstructed mantissa and scale factor representation for said data coefficients;
- a watermark insertion controller (24) for selecting perceptually significant data carriers from said mantissa and rescale factor representation and for determining a strength of insertion factor (β) for inserting said watermark;
- insertion means (25) for inserting said watermark into at least one of said perceptually significant data carriers selected for carrying said watermark, thereby providing watermarked coefficient data;
- a transformer (26) for transforming said watermarked coefficient data to the time domain, thereby providing a watermarked data stream (27).

**Patentansprüche**

1. Verfahren, um in einem Dekodierer auf der Seite des Abspielgerätes einen psychoakustisch (perceptually) kodierten Audio-Datenstrom (20) zu dekodieren und ein Wasserzeichen in diesen einzufügen, enthaltend die Schritte:

   - Empfangen und Entformatieren (21) des Datenstroms, wobei der Datenstrom Datenkoeffizienten in dem Frequenzbereich enthält;
   - Rekonstruieren (220, 221) aus den entformatierten Datenstrom Mantissen und Skalierfaktoren für die Datenkoeffizienten;
   - Kombinieren (23) der rekonstruierten Mantissen und der rekonstruierten Skalierfaktoren, um eine Matissen- und Skalierfaktor-Darstellung des entformatierten Datenstroms vorzusehen;
   - Auswählen (24) von psychoakustisch bedeutsamen Datenträgern aus der Mantissen- und Skalierfaktor-Darstellung und Bestimmen der Stärke eines Einfügungsfaktors (β) für die Einfügung des Wasserzeichens;
   - Einfügen des Wasserzeichens in wenigstens einen der psychoakustisch bedeutsamen Datenträger, der zum Führen des Wasserzeichens ausgewählt wurde, wodurch mit Wasserzeichen versehene Koeffizienten-Daten erzeugt werden;
   - Transformieren (26) der mit Wasserzeichen versehenen Koeffizienten-Daten in den Zeitbereich, wodurch ein mit Wasserzeichen versehener Datenstrom erzeugt wird (27).

2. Verfahren nach Anspruch 1, bei dem der Schritt der Auswahl von psychoakustisch relevanten Datenträgern und der Bestimmung der Stärke des Einführungsfaktors β ferner einen Schritt der Verwendung (24) von Einfügungs-Steuerdaten einschließt, die von dem entpaketisierten Datenstrom abgeleitet werden.

3. Verfahren nach Anspruch 1 oder 2, bei dem der Schritt der Einfügung (25) des Wasserzeichens einen Schritt eines Überschreibens von Bits niedrigster Wertigkeit (33) in Mantissen der zum Führen des Wasserzeichens ausgewählten Mantissen- und Skalierfaktor-Darstellung einschließt.

4. Verfahren nach Anspruch 3, bei dem die Bits niedrigster Wertigkeit in den ausgewählten Mantissen in einem Matissenteil (30b, 31b, 32b) enthalten sind, der psychoakustisch unhörbar ist.

5. Verfahren nach Anspruch 1 oder 2, bei dem die Mantissen- und Skalierfaktor-Darstellung in dem Frequenzbereich eine Darstellung von Unterband-Abtastungen oder Umwandlungs-Koeffizienten ist.

6. Verfahren nach einem der Ansprüche 1 bis 5, bei dem N Datenträger vorgesehen sind und das Wasserzeichen eine Wasserzeichen-Sequenz w1, ..., wm mit m < N ist, wobei das Verfahren die weiteren Schritte enthält:

   - Auswählen von m psychoakustisch relevanten Datenträgern vm;
   - Einfügen der Wasserzeichen-Sequenz w1, ..., wm in die psychoakustisch relevanten Datenträger vm, so dass mit Wasserzeichen versehene Datenträger V' = v'1, ..., v'm gebildet werden.

7. Verfahren nach Anspruch 6, bei dem die Datenträger Unterband-Abtastungen oder Umwandlungs-Koeffizienten sind.

8. Verfahren nach Anspruch 6 oder 7, bei dem β1, .:., βm mit m < N eine Sequenz von Stärken von Einfügungs-Faktoren sind und die mit Wasserzeichen versehenen Datenträger V' jeweils nach einer der Formeln ausgewählt sind:

$$v'i = vi + ßi*wi$$

$$v'i = vi(1 + ßi*wi)$$

$$v'i = vi*\alpha*exp(ßi*wi)$$

worin $\alpha$ ein konstanter Faktor und i = 1, ..., m ist.

9. Verfahren nach einem der Ansprüche 6 bis 8, bei dem die Wasserzeichen-Sequenz w1, ..., wm wiederholt wird, bevor eine andere Wasserzeichen-Sequenz ausgewählt wird.

10. Wasserzeichen anbringender Dekodierer, der auf der Seite des Abspielgerätes einen psychoakustisch kodierten Audio-Datenstrom dekodiert und darin ein Wasserzeichen einfügt, umfassend:

- einen Ehtformatierer (21) zum Entformatieren des empfangenen Datenstroms, wobei der Datenstrom Datenkoeffizienten in dem Frequenzbereich enthält;
- Rekonstruktionsmittel (220, 221), um aus dem entformatierten Datenstrom eine rekonstruierte Mantissen- und Skalierfaktor-Darstellung für die Datenkoeffizienten zu erzeugen;
- eine Wasserzeichen-Elnfügungs-Steuereinheit (24), um psychoakustisch bedeutsame Datenträger aus der Mantissen- und Reskalierfaktor-Darstellung auszuwählen, und um eine Stärke des Einfügungsfaktors (β) zur Einfügung des Wasserzeichens zu bestimmen;
- Einfügungsmittel (25) zum Einfügen des Wasserzeichens in wenigstens einen der zum Führen des Wasserzeichens ausgewählten psychoakustisch bedeutsamen Datenträger, um **dadurch** mit Wasserzeichen versehene Koeffizienten-Daten zu erzeugen;
- einen Umformer (26) zum Umformen der mit Wasserzeichen versehenen Koeffizienten-Daten in den Zeitbereich, um **dadurch** einen mit Wasserzeichen versehenen Datenstrom zu erzeugen (27).

**Revendications**

1. Procédé de décodage dans un décodeur du côté du lecteur d'un train de données audio perceptives codées (20) et d'insertion dans ce dernier d'un tatouage, comprenant les étapes suivantes :

- réception et déformatage (21) dudit train de données, le train de données comprenant des coefficients de données dans le domaine fréquentiel ;
- reconstitution (220, 221) à partir dudit train de données déformaté de mantisses et de facteurs d'échelle pour lesdits coefficients de données ;
- combinaison (23) desdits mantisses et facteurs d'échelle reconstitués pour obtenir une représentation par mantisse et facteur d'échelle dudit train de données déformaté ;
- sélection (24) des porteuses de données perceptives significatives à partir de ladite représentation par mantisse et facteur d'échelle, et détermination de la valeur d'un facteur d'insertion (β) pour insérer ledit tatouage ;
- insertion (25) dudit tatouage dans au moins une des porteuses de données perceptives significatives sélectionnées pour porter ledit tatouage, générant ainsi des données de coefficient tatouées ;
- transformation (26) desdites données de coefficient tatouées dans le domaine temporel, générant ainsi un train de données tatouées (27).

2. Procédé selon la revendication 1, dans lequel ladite étape de sélection des porteuses de données perceptives pertinentes et de détermination de la valeur du facteur d'insertion (β) comprend en outre une étape d'utilisation (24) de données de maîtrise d'insertion issues dudit train de données décomprimé.

3. Procédé selon la revendication 1 ou 2, dans lequel ladite étape d'insertion (25) dudit tatouage comprend une étape d'écrasement (33) des bits de poids faible dans les mantisses de ladite représentation par mantisse et facteur d'échelle sélectionnée pour porter ledit tatouage.

**4.** Procédé selon la revendication 3, dans lequel lesdits bits de poids faible sont contenus dans lesdites mantisses sélectionnées dont une partie (30b, 31b, 32b) est perceptivement inaudible.

**5.** Procédé selon la revendication 1 ou 2, dans lequel ladite représentation par mantisse et facteur d'échelle dans le domaine fréquentiel est une représentation d'échantillons de sous-bandes ou de coefficients de transformées.

**6.** Procédé selon une des revendications 1 à 5, dans lequel N porteuses de données sont générées et ledit tatouage est une séquence de tatouage w1, ..., wm avec m<N, ledit procédé comprenant les étapes suivantes :

- sélection de m porteuses de données vm perceptivement pertinentes;
- insertion de ladite séquence de tatouage w1, ..., wm dans lesdites porteuses de données vm perceptivement pertinentes de façon à constituer des porteuses de données tatouées V' = v'1, ..., v'm.

**7.** Procédé selon la revendication 6, dans lequel lesdites porteuses de données sont des échantillons de sous-bandes ou des coefficients de transformées.

**8.** Procédé selon la revendication 6 ou 7, dans lequel β1, ..., βm avec m<N est une séquence de valeurs de facteurs d'insertion et lesdites porteuses V' de données tatouées sont chacune sélectionnée selon l'une des formules :

$$v'i = vi + \beta i * wi \qquad (1)$$

$$v'i = vi (1 + \beta i * wi) \qquad (2)$$

$$v'i = vi * \alpha * exp (\beta i * wi) \qquad (3)$$

où α est un facteur constant et i = 1, ..., m.

**9.** Procédé selon une des revendications 6 à 8, dans lequel ladite séquence de tatouage w1, ..., wm est répétée avant qu'une autre séquence de tatouage ne soit sélectionnée.

**10.** Décodeur de tatouage, destiné à décoder du côté du lecteur un train de données audio perceptives (20) et à insérer dans ce dernier un tatouage, comprenant :

- un dispositif de déformatage (21) du train de données reçu, le train de données comprenant des coefficients de données dans le domaine fréquentiel ;
- un moyen de reconstitution (220, 221) pour générer à partir dudit train de données déformaté une représentation par mantisse et facteur d'échelle reconstitués pour lesdits coefficients de données ;
- un dispositif de maîtrise de l'insertion (24) d'un tatouage pour sélectionner des porteuses de données perceptives significatives à partir de ladite représentation par mantisse et facteur d'échelle et pour déterminer la valeur d'un facteur d'insertion (β) pour insérer ledit tatouage ;
- un moyen d'insertion (25) dudit tatouage dans au moins une des porteuses de données perceptives significatives sélectionnées pour porter ledit tatouage, générant ainsi des données de coefficient tatouées ;
- un dispositif de transformation (26) desdites données de coefficient tatouées dans le domaine temporel générant ainsi un train de données tatouées (27).

Time to Frequency Transformation or Subbandfilter — 120

raw PCM input — 11

Psycho-acoustic Analysis — 13

Watermark Insertion Control — 14

Extract Mantissas — 121

Extract Scalefactors — 122

Watermark Insertion — 15

watermark sequence — 10

Bitallocation — 16

Mantissa Quantization — 17

Bitstream Packing — 18

bitstream output

**Fig.1**

**Fig.2**

EP 1 104 969 B1

reconstructed from
scalefactor information

reconstructed from
requantized mantissa

33

30

| 0 | 0 | 0 | 0 | 1 | 0 | 1 | d | d | d | d |

30a

30b

most significant bit

perceptually inaudible part

31

| 0 | 0 | 0 | 0 | 1 | 0 | 1 | n | n | n | n |

31a

31b

32

| 0 | 0 | 0 | 0 | 1 | 0 | 1 | w | w | n | n |

32a

34

32b

35

**Fig.3**